(19) Europäisches Patentamt

European Patent Office

Office européen des brevets

(11) Publication number: **0 266 893 B1**

# (12) EUROPEAN PATENT SPECIFICATION

(45) Date of publication of patent specification: **09.09.92**

(51) Int. Cl.⁵: **B62D 35/00**

(21) Application number: **87308698.7**

(22) Date of filing: **01.10.87**

(54) **Vehicle aerodynamics.**

(30) Priority: **04.10.86 GB 8623901**

(43) Date of publication of application:
**11.05.88 Bulletin 88/19**

(45) Publication of the grant of the patent:
**09.09.92 Bulletin 92/37**

(84) Designated Contracting States:
**CH DE FR GB IT LI NL**

(56) References cited:
**US-A- 3 697 120**
**US-A- 4 343 506**
**US-A- 4 357 045**
**US-A- 4 518 188**

(73) Proprietor: **RICARDO CONSULTING ENGI-
NEERS LIMITED
Bridge Works Shoreham-by-Sea
West Sussex BN4 5FG(GB)**

(72) Inventor: **Dare-Bryan, Valerian
28, Armiston Road East Molesey
Surrey KT8 9JP(GB)**

(74) Representative: **Cowan, David Robert et al
E.N. Lewis & Taylor, 5 The Ouadrant
Coventry CV1 2EL(GB)**

Rank Xerox (UK) Business Services

## Description

This invention relates to vehicle aerodynamics and in particular to the aerodynamics of goods vehicles.

Certain goods vehicles are constructed each with a cab at the forward end and a box-like body rearwardly of the cab and on a common chassis. The cab and the body are usually spaced apart from one another to allow some relative movement between the cab and body due to flexing of the chassis. To obtain maximum capacity of the body it is usually of generally rectangular section, when viewed from the end, and extends beyond the sides and above the cab. Such vehicles have hitherto been aerodynamically inefficient even though attempts have been made to improve the aerodynamics by extending the body over the cab or by mounting deflectors on the cab.

An object of the invention is to provide a vehicle with improved aerodynamics.

According to the invention a vehicle having a cab at the forward end of the vehicle and a body rearwardly and spaced from the cab which body extends wider than the cab and above the cab, in which the vehicle is characterised in that the forward end of the body comprises side cheek means extending forwardly of the body to lie to the sides of and spaced from the cab to define a gap between the cab sides and the side check means, and sealing means located between the rear of the cab and the forward end of the body whereby, during forward motion of the vehicle, air enters the space between the side check means and the cab and the space between the rear of the cab and the forward end of the body to improve the aerodynamics of the vehicle.

In one arrangement the vehicle includes splitter means carried by the vehicle body and located above and spaced from the cab to define an air gap communicating with said spaces between the cab and the forward end of the body and between the side cheek means and the sides of the cab.

Preferably the leading edges of the side cheek means define a gap which is of substantially constant width over the effective length of the side cheek means.

Similarly the leading edge of the splitter means may define a gap which is substantially constant over the effective length of said leading edge.

Preferably the sealing means is located between the cab and body towards the lowermost end of the space therebetween. Since there is normally relative movement, during use, between the cab and the body the sealing means is conveniently a flexible seal.

The splitter means may be located on a forward extension of the body which is located over the cab and is spaced from the roof of the cab. In this case the splitter means defines a leading edge which is conveniently in advance of the roof line at the upper end of the cab and said leading edge lies generally horizontally.

Alternatively the splitter means is located on an upper part of the leading end of the body and lies above the rear end of an extension on the roof of the cab, the extension being profiled upwards towards the splitter means.

Generally the sides of the cab adjacent the side cheeks slope inwards in the upwards direction so, in order to maintain a substantially constant space or gap between the leading edges of the side cheeks and the cab, the leading edges are similarly sloped.

From their leading edges, which in each case may be radiussed edges, the side cheeks may extend rearwards over their outer surfaces to merge with the sides of the body.

Instead of providing splitter means the roof of the cab carries an upward extension which is profiled upwards towards the upper leading end of the body and said extension is spaced from the body at its rearward end.

Further features of the invention will appear from the following description of embodiments of the invention given by way of example only and with reference to the drawings, in which:-

Figure 1 is an end elevation, in part section, from the front of a vehicle,

Figure 2 is a side elevation of the vehicle of Figure 1,

Figure 3 is an end elevation of the top part of another vehicle,

Figure 4 is a side elevation of the front part of the vehicle of Figure 3, and

Figure 5 is a plan view of one side of the vehicle of Figures 3 and 4.

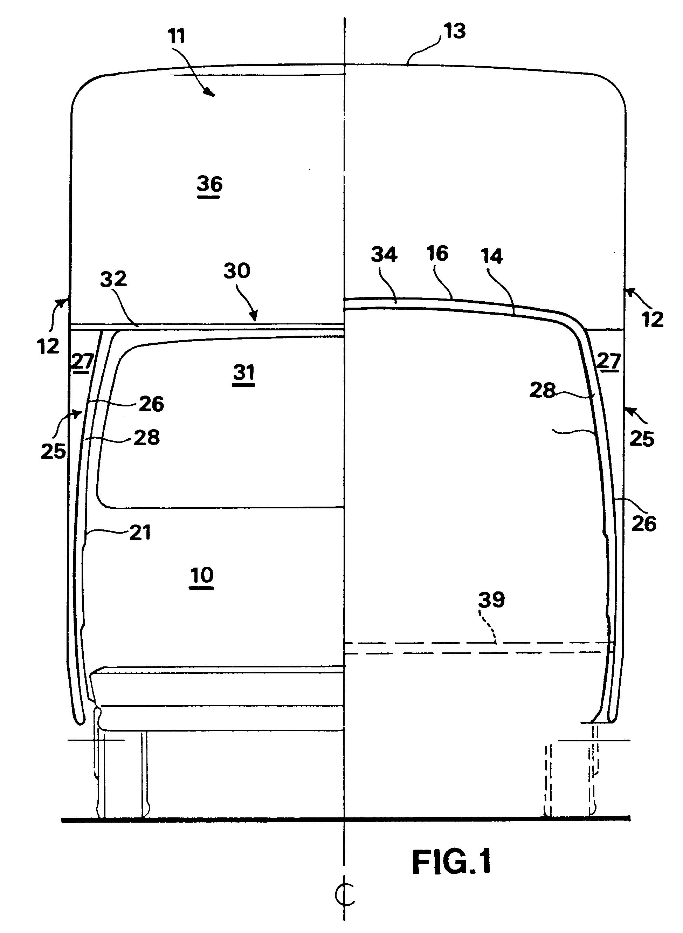

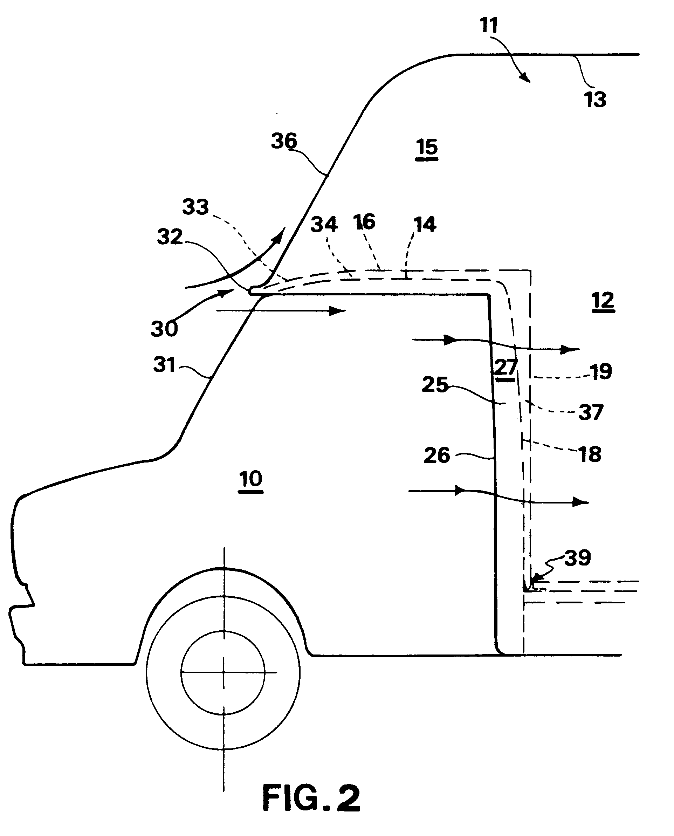

In Figures 1 and 2 of the drawings is shown a front end of a vehicle of the kind with which the invention is concerned but, as will be explained, the invention may find application in other vehicles.

The vehicle has a cab 10 at the forward end of the vehicle and a box-shaped body 11 at the rear. The cab 10 and the body 11 are mounted on a common chassis (not shown) and typically the chassis allows for some play or relative flexing movement between the cab and the body. The cab 10, body 11 and chassis are of generally conventional form. In particular the body 11 is of generally rectangular cross section as seen from the ends of the vehicle so that the sides 12 of the body are at a wider spacing than the cab 10 and the top 13 of the body is at a higher level than the top 14 of the cab.

In the illustrated vehicle the body 11 has a portion 15 extending forwardly over the top of the cab 10, the portion 15 having an interior space (not shown) which communicates with the main body space at its rear end. The floor 16 of the portion 15 is spaced from the roof or top 14 of the cab.

At the rear 18 of the cab 10 the cab is spaced from the front wall 19 of the body 11 in conventional manner.

The cab 10 may take various shapes but in most cases, as shown in the drawings, the sides 21 of the cab slope inwardly towards each other in the upwards direction. Thus the vertical sides 12 of the body have an increased spacing relative to the sides 21 of the cab which normally presents a vertical front body surface of increasing surface area in the upwards direction and this surface is aerodynamically disadvantageous. However to locate the side walls 12 of the body in alignment with the sides 21 of the cab to improve the aerodynamics would reduce the load space of the body and make the load space an awkward shape.

To improve the aerodynamic shape of the vehicle a side cheek member 25 is formed on the body at each side of the body, which member 25 extends forwardly of the front wall 19 of the body at the sides of the body and has a leading edge 26 of arcuate section. The leading edge 26 is spaced from the side wall 21 of the cab at a constant predetermined distance throughout its length which is, for example, a gap of the order of 50 mm wide. Thus, since the side wall 21 of the cab slopes inwards towards its upper end, the leading edge 26 is correspondingly sloped as seen in Figure 1. To accommodate the sloping of the leading edge the side cheek member 25 is inclined at 27 at least over its upper region in order to merge throughout its length with the side of the body 11.

The side cheek members 25 each define a space 28 between the side wall 21 of the cab and the inner surface of the member 25.

The portion 15 of the body 11 is formed with splitter means 30 at its lower edge which is adjacent the upper side of the cab windscreen 31. The splitter means 30 includes a forward facing leading edge 32 of arcuate cross-section which lies horizontally and is spaced a predetermined distance from the windscreen. The underside 33 of the splitter means 30 extends rearwardly to merge with the floor 15 and conforms generally to the shape of the cab roof 14 but is spaced from the roof to define a space 34.

From its upper side the leading edge 32 extends upwards and rearwards to define a sloping front wall 36 of the portion 15 of the body. The spaces 28,34 communicate with the space 37 between the rear 18 of the cab 10 and the front 19 of the bo dy 11 and the space 37 is sealed by the provision of a resilient seal 39 which is located at the lowermost end of the space 37.

The seal 39 is conveniently a U-shaped rubber element which extends across the front of the body 11 and is secured thereto along one limb of the U. The other limb of the U resiliently engages the rear 18 of the cab 10.

The action of the splitter means 30 is to split the air flow and cause the air above the leading edge 32 to pass over the vehicle. Passage of air under the leading edge 32 causes the air in the space 34 to become pressurised because it is prevented from leaving the spaces 34,37 by the seal 39.

Similarly air passing along the sides of the cab 10 causes the spaces 28, 37 to become pressurised with air.

Pressurising of the spaces 28 and 34,and hence the spaces 37, causes an aerodynamic flow of air over the cab in the region of the leading edges 26,32 without the need to provide continuous contoured surfaces of the structure and it has been found that the air flow thus induced makes a significant contribution to a reduction in drag of the vehicle through the air.

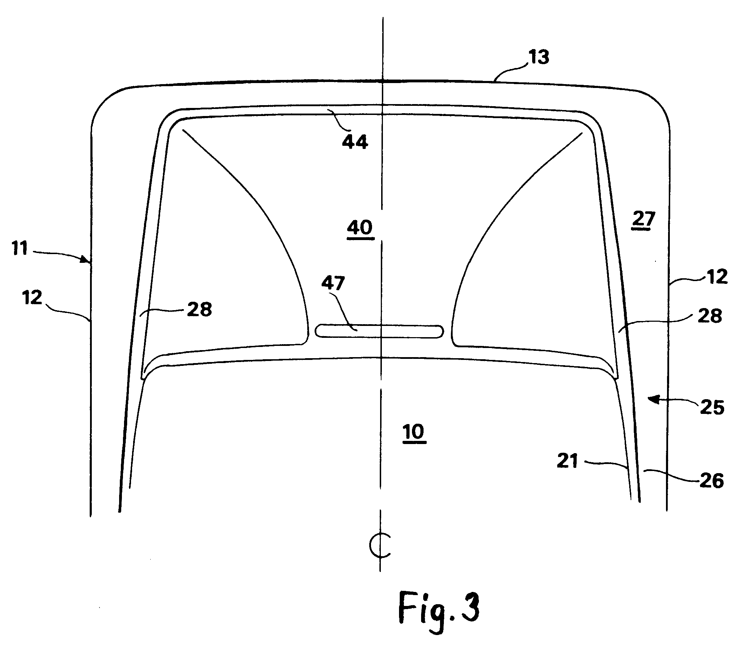

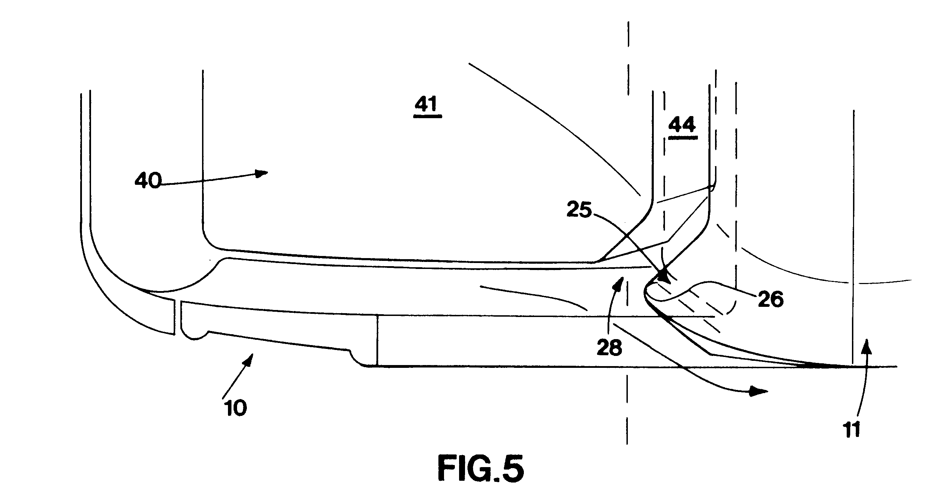

Referring now to Figures 3-5 a different kind of vehicle is shown, which is relatively larger than the vehicle of Figures 1 and 2 but has the common features of a cab 10 and body 11 mounted on a common chassis. In this case the cab may be of the kind which is able to tilt forward about a horizontal axis towards its lower forward end.

The body 11 is of generally rectangular cross-section, as seen from the ends, and the front end of the body is spaced from the rear side of the cab.

The cab 10 and body 11 of Figures 3-5 differ from the corresponding parts of Figures 1 and 2 in that there is no forward extension of the body and instead the cab 10 has an upper extension 40 which is attached to the roof of the cab. The extension 40 is profiled, as shown, to extend upwards and rearwards in side elevation on its upper side 41 to be aligned with but spaced from an extension 43 at the forward end of the body 11. This spacing defines a gap 44 between the extensions 40 and 43.

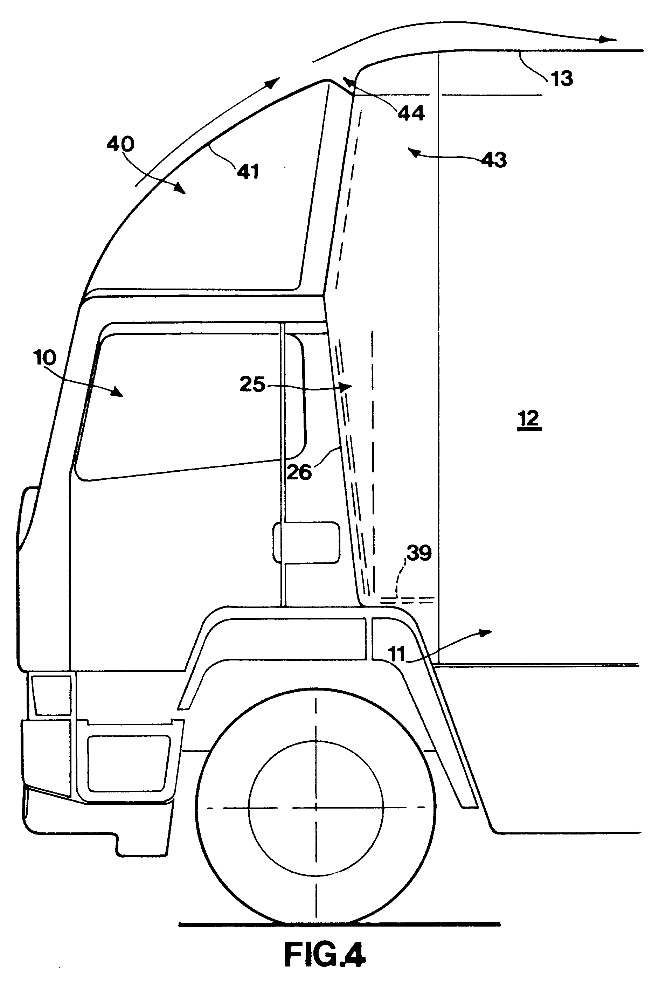

Extensions 45 are located and secured to the forward side edges of the body 11 to form side check members 25 in a similar manner to the embodiment of Figures 1 and 2 except that in the present case the side cheek members 25 entend from the lower part of the cab upwardly and over the cab extension 40. The leading edges 26 of the side cheek members 25 are of arcuate section and are spaced from the cab 10 and its extension to present a forward facing gap 28 over their lengths whose width is generally constant. The leading edges 26 are sloped to the vertical corresponding to the slope of the cab sides 21 and the sides of the extension 40. As viewed in side elevation (Figure 4) the leading edges 26 are inclined forwards to the vertical over a lower region corresponding to the height of the cab, and are inclined rearwards over their upper region corresponding to the height of the extensions 40.

Sealing means 39 is provided, in the same manner as for the Figures 1 and 2 embodiment, located between the rear side of the cab 10 and the front end of the body 11 to seal the gap towards the lower end thereof and to prevent air from leaving the space from the lower end thereof.

In the embodiment illustrated in Figures 3-5 no splitter means, such as described in relation to Figures 1 and 2, is provided. In operation the side cheek arrangement 25 and sealing means 39 functions in a similar manner in that forward motion of the vehicle causes a build-up of air pressure in the gaps 28 defined by the side check members 25 and in the gap to the rear of the cab and the extension 40. The pressurised air causes an aerodynamic flow of air over and around the sides of the cab 10 and then over the sides of the body 11.

Air passing upwards over the cab extension 40 encounters a turbulent flow of air which leaves the space 44 between the body 10 and the rear of the extension 40. This causes turbulence in the air which has passed over the profiled surface 41 of the extension but the air is then drawn downwards to maintain a stream of air close to the upper surface 13. This arrangement is particularly advantageous in retaining aeroydnamic flow over relatively long vehicle bodies.

In an alternative arrangement (not shown) for the vehicle of Figures 3-5 air splitting means is provided at the upper end of the space between the cab extension 40 and body 11. Thus the body is provided with a leading edge equivalent to edge 32 above the level of the topmost part of the extension 40 and lying generally horizontally to define a gap between the leading edge and the extension whereby the air within the gap becomes pressurised and this pressurised air communicates with the pressurised air in the side cheek gaps 28 and in the gap between the rear of the cab and the front of the body.

As illustrated the cab extension 40 has an air entry slot 47 by which air may enter during motion, the slot communicating with the rear of the extension.

## Claims

1. A vehicle having a cab (10) at the forward end of the vehicle and a body (11) rearwardly and spaced from the cab which body (11) extends wider than the cab and above the cab (10), in which the vehicle is characterised in that the forward end of the body (11) comprises side cheek means (25) extending forwardly of the body to lie to the sides of an spaced from the cab (10) to define a gap (28) between the cab sides (21) and the side cheek means (25), and sealing means (39) located between the rear (18) of the cab and the forward end (19) of the body whereby, during forward motion of the vehicle, air enters the space (28) between the side cheek means (25) and the cab (10) and the space (37) between the rear (18) of the cab (10) and the forward end (19) of the body to improve the aerodynamics of the vehicle.

2. A vehicle according to Claim 1 characterised by splitter means (30) carried by the vehicle body (11) and located above and spaced from the cab (10) to define an air gap (34) communicating with said spaces (28) and (37) between the cab (10) and the forward end (19) of the body and between the side cheek means (25) and the sides (21) of the cab.

3. A vehicle according to Claim 1 or 2 characterised in that the leading edges (26) of the side cheek means (25) define a gap (28) which is of substantially constant width over the effective length of the side cheek means (25).

4. A vehicle according to Claim 2 characterised in that the leading edge (32) of the splitter means (30) defines a gap (34) which is substantially constant over the effective length of said leading edge (32).

5. A vehicle according to any one of the preceding claims characterised in that the sealing means (39) is located between the cab (10) and the body (11) towards the lowermost end of the space (37) therebetween.

6. A vehicle according to Claim 5 characterised in that the sealing means (39) is defined by a flexible sealing element located on the cab (10) or on the body (11) and resiliently engaging the body (11) or the cab (10) respectively.

7. A vehicle according to Claim 2 or Claim 4 characterised in that the splitter means (30) is located on an extension (15) of the body (11) which extends over the roof (14) of the cab (10) and is spaced therefrom and a leading edge (32) of splitter means (30) is in advance of the forward end of the upper part of the cab (10).

8. A vehicle according to Claim 2 or Claim 4 characterised in that the splitter means (30) is located on an upper part of the leading end of the body (11) and lies above the rear end of an extension on the roof of the cab (10), the extension being profiled upwards towards the splitter means.

9. A vehicle according to any one of the preceding claims wherein the sides (21) of the cab (10) slope inwardly towards their upper ends, characterised in that the leading edges (26) of the side cheeks (25) slope correspondingly inwards in their upwards direction.

10. A vehicle according to any one of the preceding claims, characterised in that the side cheeks (25) extend from the outer sides of their leading edges (26) to merge with the sides (12) of the body (11).

11. A vehicle according to Claim 1 characterised in that the roof (14) of the cab (10) carries an upward extension which is profiled upwards towards the upper leading end of the body (11) and said extension is spaced from the body at its rearward end.

**Patentansprüche**

1. Fahrzeug mit einem Fahrerhaus (10) an seinem vorderen Ende und einem hinter dem Fahrerhaus befindlichen und von diesem beabstandeten Aufbau (11), wobei der Aufbau (11) sich seitlich und in der Höhe über das Fahrerhaus (10) hinaus erstreckt, wobei das Fahrzeug dadurch gekennzeichnet ist, daß das vordere Ende des Aufbaus (11) folgendes umfaßt: Eine Seitenbackeneinrichtung (25), welche sich vor dem Aufbau derart erstreckt, daß sie zur Bildung eines Spalts (28) zwischen den Fahrerhausseiten (21) und der Seitenbackeneinrichtung (25) an den Seiten des Fahrerhauses (10) und von diesem beabstandet liegt, und eine zwischen der Rückseite (18) des Fahrerhauses und dem vorderen Ende (19) des Aufbaus befindliche Dichtungseinrichtung (39), wodurch während der Vorwärtsbewegung des Fahrzeugs zur Verbesserung seiner Aerodynamik Luft in den Raum (28) zwischen der Seitenbackeneinrichtung (25) und dem Fahrerhaus (10) und in den Raum (37) zwischen der Rückseite (18) des Fahrerhauses (10) und dem vorderen Ende (19) des Aufbaus eintritt.

2. Fahrzeug nach Anspruch 1, gekennzeichnet durch eine vom Fahrzeugaufbau (11) getragene und über dem Fahrerhaus (10) und von diesem beabstandet angeordnete Teilungseinrichtung (30) zur Bildung eines Luftspalts (34), der mit den Räumen (28) und (37) zwischen dem Fahrerhaus (10) und dem vorderen Ende (19) des Aufbaus bzw. zwischen der Seitenbackeneinrichtung (25) und den Seiten (21) des Fahrerhauses in Verbindung steht.

3. Fahrzeug nach Anspruch 1 oder 2, dadurch gekennzeichnet, daß die Vorderkanten (26) der Seitenbackeneinrichtung (25) einen Spalt (28) bilden, der über die Nutzlänge der Seitenbackeneinrichtung (25) von im wesentlichen konstanter Breite ist.

4. Fahrzeug nach Anspruch 2, dadurch gekennzeichnet, daß die Vorderkante (32) der Teilungseinrichtung (30) einen Spalt (34) bildet, der über die Nutzlänge der Vorderkante (32) im wesentlichen konstant ist.

5. Fahrzeug nach einem der vorhergehenden Ansprüche, dadurch gekennzeichnet, daß die Dichtungseinrichtung (39) zwischen dem Fahrerhaus (10) und dem Aufbau (11) in Richtung auf das unterste Ende des dazwischenliegenden Raumes (37) zu angeordnet ist.

6. Fahrzeug nach Anspruch 5, dadurch gekennzeichnet, daß die Dichtungseinrichtung (39) von einem auf dem Fahrerhaus (10) oder auf dem Aufbau (11) angeordneten elastischen Dichtungselement gebildet ist, das jeweils den Aufbau (11) bzw. das Fahrerhaus (10) elastisch in Eingriff nimmt.

7. Fahrzeug nach Anspruch 2 oder Anspruch 4, dadurch gekennzeichnet, daß die Teilungseinrichtung (30) an einer Verlängerung (15) des Aufbaus (11) angeordnet ist, die sich über das Dach (14) des Fahrerhauses (10) erstreckt und von diesem beabstandet ist, und daß sich eine Vorderkante (32) der Teilungseinrichtung (30) vor dem vorderen Ende des oberen Teils des Fahrerhauses (10) befindet.

8. Fahrzeug nach Anspruch 2 oder Anspruch 4, dadurch gekennzeichnet, daß die Teilungseinrichtung (30) an einem oberen Teil des Vorderendes des Aufbaus (11) angeordnet ist und über dem hinteren Ende einer Verlängerung auf dem Dach des Fahrerhauses (10) liegt, wobei die Verlängerung im Profil nach oben in Richtung auf die Teilungseinrichtung zu verläuft.

9. Fahrzeug nach einem der vorhergehenden Ansprüche, wobei die Seiten (21) des Fahrerhauses (10) auf ihre oberen Enden zu nach innen abgeschrägt sind, dadurch gekennzeichnet, daß die Vorderkanten (26) der Seitenbacken (25) in ihrer Aufwärtsrichtung entsprechend nach innen abgeschrägt sind.

10. Fahrzeug nach einem der vorhergehenden Ansprüche, dadurch gekennzeichnet, daß die Seitenbacken (25) zum Übergang in die Seiten (12) des Aufbaus (11) von den Außenseiten ihrer Vorderkanten (26) ausgehen.

11. Fahrzeug nach Anspruch 1, dadurch gekennzeichnet, daß das Dach (14) des Fahrerhauses (10) eine aufwärtsgerichtete Verlängerung trägt, die im Profil nach oben auf das obere Vorderende des Aufbaus (11) zu verläuft, und daß die Verlängerung an ihrem hinteren Ende vom Aufbau beabstandet ist.

**Revendications**

1. Véhicule possédant une cabine (10) à l'extrémité avant du véhicule et une carrosserie (11) à l'arrière de la cabine et espacée de celle-ci, laquelle carrosserie (11) s'étend au-delà de la largeur de la cabine et au-dessus de la cabine (10), dans lequel le véhicule est caractérisé en ce que l'extrémité avant de la carrosserie (11) comprend un moyen (25) à joue latérale s'étendant vers l'avant de la carrosserie pour se trouver auprès des côtés de la cabine (10) et espacé de celle-ci pour définir un intervalle (28) entre les côtés (21) de la cabine et le moyen (25) à joue latérale, et un moyen (39) à joint d'étanchéité situé entre l'arrière (18) de la cabine et l'extrémité avant (19) de la carrosserie grâce à quoi, pendant le mouvement d'avance du véhicule, de l'air pénètre dans l'espace (28) entre le moyen (25) à joue latérale et la cabine (10) et l'espace (37) entre l'arrière (18) de la cabine (10) et l'extrémité avant (19) de la carrosserie afin d'améliorer les qualités aérodynamiques du véhicule.

2. Véhicule selon la revendication 1, caractérisé par un moyen de fendage (30) porté par la carrosserie (11) du véhicule et situé au-dessus de la cabine (10) et espacé de celle-ci pour définir une couche d'air intermédiaire (34) communicant avec lesdits espaces (28) et (37) entre la cabine (10) et l'extrémité avant (19) de la carrosserie et entre le moyen (25) à joue latérale et les côtés (21) de la cabine.

3. Véhicule selon la revendication 1 ou 2, caractérisé en ce que les bords d'attaque (26) du moyen (25) à joue latérale définissent un intervalle (28) qui est de largeur sensiblement constante sur la longueur utile du moyen (25) à joue latérale.

4. Véhicule selon la revendication 2, caractérisé en ce que le bord d'attaque (32) du moyen de fendage (30) définit un intervalle (34) qui est sensiblement constant sur la longueur utile dudit bord d'attaque (32).

5. Véhicule selon l'une quelconque des revendications précédentes, caractérisé en ce que le moyen à joint d'étanchéité (39) est situé entre la cabine (10) et la carrosserie (11) en direction de l'extrémité la plus basse de l'espace (37) entre celles-ci.

6. Véhicule selon la revendication 5, caractérisé en ce que le moyen à joint d'étanchéité (39) est défini par un élément à joint d'étanchéité flexible situé sur la cabine (10) ou sur la carrosserie (11) et s'engageant de manière élastique avec la carrosserie (11) ou la cabine (10) respectivement.

7. Véhicule selon la revendication 2 ou la revendication 4, caractérisé en ce que le moyen de fendage (30) est situé sur un prolongement (15) de la carrosserie (11) qui s'étend au-dessus du toit (14) de la cabine (10) et est espacé de celui-ci, et un bord d'attaque (32) d'un moyen de fendage (30) est en avant de l'extrémité avant de la partie supérieure de la cabine (10).

8. Véhicule selon la revendication 2 ou la revendication 4, caractérisé en ce que le moyen de fendage (30) est situé sur une partie supérieure de l'extrémité d'attaque de la carrosserie (11) et se trouve au-dessus de l'extrémité arrière d'un prolongement sur le toit de la cabine (10), le prolongement étant profilé vers le haut en direction du moyen de fendage.

9. Véhicule selon l'une quelconque des revendications précédentes, dans lequel les côtés (21) de la cabine (10) sont biaisés vers l'intérieur en direction de leur extrémité supérieure, caractérisé en ce que les bords d'attaque (26) des joues latérales (25) sont biaisés de manière correspondante vers l'intérieur dans leur sens vers le haut.

10. Véhicule selon l'une quelconque des revendications précédentes, caractérisé en ce que les joues latérales (25) s'étendent depuis les côtés extérieurs de leur bords d'attaque (26) pour se fondre avec les côtés (12) de la carrosserie (11).

**11.** Véhicule selon la revendication 1, caractérisé en ce que le toit (14) de la cabine (10) porte un prolongement vers le haut qui est profilé vers le haut en direction de l'extrémité d'attaque supérieure de la carrosserie (11) et ledit prolongement est espacé de la carrosserie au niveau de son extrémité arrière.

**FIG.1**

**FIG. 2**

Fig.3

EP 0 266 893 B1

FIG.4

**FIG.5**